# FASCICULE DE BREVET EUROPEEN

(11) **EP 2 633 687 B1**
(45) Date de publication et mention de la délivrance du brevet: **22.04.2020**
(21) Numéro de dépôt: 11787716.7
(22) Date de dépôt: 18.10.2011
(51) Int. Cl.: H04N 19/105, H04N 19/109, H04N 19/176, H04N 19/179, H04N 19/46, H04N 19/51, H04N 19/61

(54) **CODAGE ET DÉCODAGE VIDÉO A PARTIR D'UN ÉPITOME**
VIDEOKODIERUNG UND -DEKODIERUNG MIT EINEM EPITOM
VIDEO ENCODING AND DECODING USING AN EPITOME

(30) Priorité: 25.10.2010 FR 1058748
(43) Date de publication de la demande: 04.09.2013
(60) Demande divisionnaire: 20153376.7
(73) Titulaire: Orange, 75015 Paris (FR)
(72) Inventeur: AMONOU, Isabelle, 35510 Cesson Sevigne (FR)
(74) Mandataire: Vidon Brevets & Stratégie
(86) Numéro de dépôt international: PCT/FR2011/052432
(87) Numéro de publication internationale: WO 2012/056147

(56) Documents cités:
- QIJUN WANG ET AL: "Intra coding and refresh based on video epitomic analysis", MULTIMEDIA AND EXPO (ICME), 2010 IEEE INTERNATIONAL CONFERENCE ON, IEEE, PISCATAWAY, NJ, USA, 19 juillet 2010 (2010-07-19), pages 452-455, XP031761412, ISBN: 978-1-4244-7491-2
- QIJUN WANG ET AL: "Improving Intra Coding in H.264\AVC by Image Epitome", 15 décembre 2009 (2009-12-15), ADVANCES IN MULTIMEDIA INFORMATION PROCESSING - PCM 2009, SPRINGER BERLIN HEIDELBERG, BERLIN, HEIDELBERG, PAGE(S) 190 - 200, XP019134894, ISBN: 978-3-642-10466-4 cité dans la demande abrégé Sections 1 and 3
- STEFFEN KAMP ET AL: "Decoder side motion vector derivation for inter frame video coding", IMAGE PROCESSING, 2008. ICIP 2008. 15TH IEEE INTERNATIONAL CONFERENCE, IEEE, PISCATAWAY, NJ, USA, 12 octobre 2008 (2008-10-12), pages 1120-1123, XP031374203, ISBN: 978-1-4244-1765-0
- VINCENT CHEUNG ET AL: "Video Epitomes", INTERNATIONAL JOURNAL OF COMPUTER VISION, KLUWER ACADEMIC PUBLISHERS, BO, vol. 76, no. 2, 23 décembre 2006 (2006-12-23), pages 141-152, XP019581846, ISSN: 1573-1405
- H. Wang, Y. Wexler, E. Ofek, H. Hoppe: "Factoring repeated content within and among images", ACM SIGGRAPH 2008 papers (SIGGRAPH '08, Los Angeles), 14, 11 août 2008 (2008-08-11), 15 août 2008 (2008-08-15), pages 1-10, XP002636385, New York, NY, USA DOI: 10.1145/1399504.1360613 Extrait de l'Internet: URL:http://dl.acm.org/citation.cfm?doid=13 99504.1360613 [extrait le 2011-05-04] cité dans la demande

## Description

### 1. Domaine de l'invention

Le domaine de l'invention est celui du codage et du décodage d'images ou de séquences d'images, et notamment de flux vidéo.

Plus précisément, l'invention concerne la compression d'images ou de séquences d'images utilisant une représentation par blocs des images.

L'invention peut notamment s'appliquer au codage vidéo mis en œuvre dans les codeurs vidéo actuels (MPEG, H.264, etc et leurs amendements) ou à venir (ITU-T/ISO HEVC, en anglais « High-Efficiency Video Coding » pour codage vidéo à haute efficacité), et au décodage correspondant.

### 2. Art antérieur

Les images et séquences d'images numériques occupent beaucoup d'espace en termes de mémoire, ce qui nécessite, lorsque l'on transmet ces images, de les compresser afin d'éviter les problèmes d'encombrement sur le réseau utilisé pour cette transmission. En effet, le débit utilisable sur ce réseau est généralement limité.

On connaît déjà de nombreuses techniques de compression de données vidéo. Parmi celles-ci, la technique H.264 met en œuvre une prédiction de pixels d'une image courante par rapport à d'autres pixels appartenant à la même image (prédiction intra) ou à une image précédente ou suivante (prédiction inter).

Plus précisément, selon cette technique H.264, des images I sont codées par prédiction spatiale (prédiction intra), et des images P et B sont codées par prédiction temporelle par rapport à d'autres images I, P ou B (prédiction inter), codées/décodées à l'aide d'une compensation en mouvement par exemple.

Pour ce faire, les images sont découpées en macroblocs, qui sont ensuite subdivisés en blocs, constitués de pixels. Chaque bloc ou macrobloc est codé par prédiction intra ou inter images.

Classiquement, le codage d'un bloc courant est réalisé à l'aide d'une prédiction du bloc courant, dit bloc prédit, et d'un résidu de prédiction, correspondant à une différence entre le bloc courant et le bloc prédit. Ce résidu de prédiction, encore appelé bloc résiduel, est transmis au décodeur, qui reconstruit le bloc courant en ajoutant ce bloc résiduel à la prédiction.

La prédiction du bloc courant est établie à l'aide d'informations déjà reconstruites (blocs précédents déjà codés/décodés dans l'image courante, images préalablement codées dans le cadre d'un codage vidéo, etc). Le bloc résiduel obtenu est alors transformé, par exemple en utilisant une transformée de type DCT (transformée en cosinus discrète). Les coefficients du bloc résiduel transformé sont alors quantifiés, puis codés par un codage entropique.

Le décodage est fait image par image, et pour chaque image, bloc par bloc ou macrobloc par macrobloc. Pour chaque (macro)bloc, les éléments correspondants du flux sont lus. La quantification inverse et la transformation inverse des coefficients du(des) bloc(s) résiduel(s) associé(s) au (macro)bloc sont effectuées. Puis, la prédiction du (macro)bloc est calculée et le (macro)bloc est reconstruit en ajoutant la prédiction au(x) bloc(s) résiduel(s) décodé(s).

Selon cette technique de compression, on transmet donc des blocs résiduels transformés, quantifiés, et codés, au décodeur, pour lui permettre de reconstruire la ou les image(s) d'origine. Classiquement, afin de disposer au codeur et au décodeur des mêmes informations de prédiction, le codeur inclut le décodeur dans sa boucle de codage.

Afin d'améliorer encore la compression des images ou séquences d'images, Q. Wang, R. Hu et Z. Wang ont proposé une nouvelle technique de prédiction intra dans le document « Improving Intra Coding in H.264\AVC by Image Epitome, Advances in Multimedia Information Processing », basée sur l'utilisation d'épitomés (en anglais « epitome » ou « jigsaw »), voir aussi le document Q. WANG et al: "Intra coding and refresh based on video epitomic analysis", IEEE International Conférence on Multimedia and Expo (ICME), 2010, IEEE, PISCATAWAY, NJ, USA, 19 juillet 2010, pages 452-455, ISBN: 978-1-4244-7491-2.

Un épitomé est une version condensée, généralement miniature, d'une image, contenant les composantes principales de textures et de contour de cette image. La taille de l'épitomé est généralement réduite par rapport à celle de l'image d'origine, mais l'épitomé contient toujours les éléments constitutifs les plus pertinents pour la reconstruction de l'image. Comme décrit dans les documents précités, l'épitomé peut être construit en utilisant une technique de type maximum de vraisemblance a posteriori (en anglais MLE, pour « Maximum Likelihood Estimation »), associée à un algorithme de type espérance/maximisation (en anglais EM, pour « Expectation/Maximization »). Une fois que l'épitomé a été construit pour l'image, il peut être utilisé pour reconstruire (synthétiser) certaines parties de l'image.

Les épitomés ont d'abord été utilisés pour l'analyse et la synthèse d'images et de vidéos. Pour ces applications, la synthèse dite « inverse » permet de générer un échantillon de texture (correspondant à l'épitomé) qui représente au mieux une texture plus large. Lors de la synthèse dite « directe », il est alors possible de re-synthétiser une texture de taille arbitraire à partir de cet échantillon. Par exemple, il est possible de re-synthétiser la façade d'un immeuble à partir d'un échantillon de texture correspondant à un étage de l'immeuble, ou à une fenêtre et ses contours de l'immeuble.

Dans les documents précités, Q. Wang et al. ont proposé d'intégrer une telle méthode de synthèse inverse au sein d'un codeur H.264. La technique de prédiction intra selon ces documents est basée sur la construction d'un épitomé au codeur. La prédiction du bloc en cours de codage est alors générée à partir de l'épitomé, par une technique dite de « Template Matching » exploitant la recherche d'un motif similaire dans l'épitomé à partir des observations connues dans un voisinage de la zone à reconstruire. En d'autres termes, le bloc de l'épitomé qui possède le voisinage le plus proche de celui du bloc en cours de codage est utilisé pour cette prédiction. Cet épitomé est ensuite transmis au décodeur, et utilisé pour remplacer la prédiction DC du codeur H.264.

On utilise de cette façon une information globale sur l'image à coder pour la prédiction intra (l'épitomé étant construit à partir de l'image entière), et non uniquement le voisinage causal du bloc en cours de codage. De plus, l'utilisation d'un épitomé pour la prédiction intra permet d'améliorer la compression des données transmises, puisque l'épitomé est une version condensée de l'image. Par ailleurs, la prédiction intra mise en oeuvre à partir d'un épitomé ne présuppose pas un alignement des blocs de l'image.

Toutefois, bien que cette technique de prédiction offre de bonnes performances en termes de compression, elle n'est pas adaptée au codage de tout type d'images ou séquences d'images.

### 3. Exposé de l'invention

L'invention propose un nouveau procédé de codage d'une séquence d'images.

Selon l'invention, un tel procédé met en œuvre les étapes de la revendication indépendante 1.

Ainsi, l'invention propose une nouvelle technique de prédiction inter-images, basée sur la génération et l'utilisation au codeur (et au décodeur destiné à décoder la séquence d'images) d'un épitomé, ou image condensée, spécifique.

Un tel épitomé est construit à partir de plusieurs images de la séquence, et est donc représentatif d'une partie de la séquence. L'invention permet ainsi de prédire plus efficacement l'image courante à partir de cet épitomé.

L'épitomé ainsi construit n'est pas nécessairement transmis au décodeur, et peut être reconstruit par le décodeur. On améliore de cette façon la compacité des données transmises. Ainsi, l'invention permet de réduire le débit nécessaire au codage d'une séquence d'images, sans en affecter la qualité.

En particulier, l'image courante et l'ensemble d'images utilisé pour construire l'épitomé appartiennent à une même sous-séquence de la séquence.

Une telle sous-séquence appartient au groupe comprenant :
- un même plan d'images ;
- un GOP (en anglais « Group Of Pictures » pour groupe d'images), comprenant par exemple des images de type P et B localisées entre deux images de type I selon l'ordre de codage de la séquence, tel que défini selon les normes H263, MPEG2, etc.

L'ensemble d'images utilisé pour construire l'épitomé est une liste d'images de référence de l'image courante, définie par exemple selon les normes MPEG4, H.264, etc.

Par exemple, on utilise pour construire l'épitomé une sous-séquence d'images correspondant à une même scène (ou « shot ») de la séquence d'images que l'image courante. De cette façon, les différentes images de la sous-séquence présentent des caractéristiques communes, ce qui simplifie la construction de l'épitomé et permet de diminuer sa taille.

Selon une autre caractéristique de l'invention, l'étape de construction tient également compte du voisinage causal de l'image courante. L'épitomé ainsi construit représente au mieux l'image courante.

Selon un aspect particulier de l'invention, pour le codage d'au moins une image suivant l'image courante selon un ordre de codage de la séquence, le procédé de codage comprend une étape de mise à jour de l'ensemble d'images utilisées pour construire l'épitomé, tenant compte du contexte et/ou de l'avancement du codage dans la séquence, et de mise à jour de l'épitomé à partir de l'ensemble mis à jour.

De cette façon, il n'est pas nécessaire de construire un nouvel épitomé pour chaque nouvelle image, ce qui permet de diminuer la quantité d'opérations à effectuer. De plus, l'épitomé ainsi mis à jour reste particulièrement bien représentatif de la sous-séquence d'images.

Par exemple, il est possible de mettre à jour l'épitomé en tenant compte d'une « image de différence » entre l'image courante et une image suivant cette image courante, dite image suivante.

Selon cet aspect de l'invention, le procédé de codage comprend une étape de transmission d'un épitomé complémentaire à au moins un décodeur destiné à décoder la séquence d'images, obtenu par comparaison de l'épitomé associé à l'image courante et de l'épitomé mis à jour associé à une image suivante.

On diminue de cette façon la quantité d'informations à transmettre au décodeur. En effet, il est possible selon cet aspect de ne transmettre que les différences entre l'épitomé associé à l'image courante et l'épitomé mis à jour, au lieu de transmettre l'épitomé mis à jour.

Selon une caractéristique particulière de l'invention, l'épitomé présente une taille identique à celle de l'image courante.

Dans cette façon, il n'est pas nécessaire de re-dimensionner les vecteurs de mouvement utilisés pour la prédiction inter-images.

De plus, il est ainsi possible d'utiliser pour la prédiction un épitomé de meilleure qualité, qui peut être plus volumineux dans la mesure où il n'est pas nécessairement transmis au décodeur. En effet, la taille de l'épitomé pouvant être choisie, il est possible de réaliser un compromis entre la qualité de la reconstruction et la compacité : plus l'épitomé est grand et plus la qualité de codage sera élevée.

Dans un autre mode de réalisation, l'invention concerne un dispositif de codage d'une séquence d'images tel que défini par la revendication indépendante 6.

Un tel codeur est notamment adapté à mettre en œuvre le procédé de codage décrit précédemment. Il s'agit par exemple d'un codeur vidéo de type H.264. Ce dispositif de codage pourra bien sûr comporter les différentes caractéristiques relatives au procédé de codage selon l'invention. Ainsi, les caractéristiques et avantages de ce codeur sont les mêmes que ceux du procédé de codage, et ne sont pas détaillés plus amplement.

L'invention concerne également un signal représentatif d'une séquence d'images codée selon le procédé de codage décrit ci-dessus.

Selon l'invention, un tel signal est remarquable en ce qu'au moins une image courante de la séquence étant prédite par prédiction inter-images à partir d'un épitomé représentatif de l'image courante, construit à partir d'un ensemble d'au moins deux images de la séquence, le signal porte au moins un indicateur signalant une utilisation de l'épitomé lors de la prédiction inter-images de l'image courante et/ou une présence de l'épitomé dans le signal.

Ainsi, un tel indicateur permet d'indiquer au décodeur le mode de prédiction utilisé, et s'il peut lire l'épitomé ou un épitomé complémentaire dans le signal, ou s'il doit les reconstruire.

Ce signal pourra bien sûr comporter les différentes caractéristiques relatives au procédé de codage selon l'invention.

L'invention concerne également un support d'enregistrement portant un signal tel que décrit précédemment.

Un autre aspect de l'invention concerne un procédé de décodage d'un signal représentatif d'une séquence d'images tel que défini par la revendication indépendante 8.

L'invention permet ainsi de retrouver l'épitomé spécifique au niveau du décodeur, et de prédire l'image à reconstruire à partir de cet épitomé. Elle propose donc un nouveau mode de prédiction inter-images. Pour ce faire, le procédé de décodage met en œuvre la même étape de prédiction qu'au codage.

Un tel procédé de décodage est notamment adapté à décoder une séquence d'images codée selon le procédé de codage décrit ci-dessus. Les caractéristiques et avantages de ce procédé de décodage sont donc les mêmes que ceux du procédé de codage, et ne sont pas détaillés plus amplement.

En particulier, l'étape d'obtention met en œuvre une construction de l'épitomé à partir d'un ensemble d'au moins deux images de la séquence. En particulier, cet ensemble comprend une liste d'images de référence de l'image à reconstruire. En d'autres termes, l'épitomé n'est pas transmis dans le signal, ce qui permet d'améliorer la qualité des données (qui peuvent être prédites à partir d'un épitomé plus volumineux), et la compacité des données transmises.

En variante, pour le décodage d'au moins une image suivant l'image à reconstruire selon un ordre de décodage de la séquence, le procédé de décodage comprend une étape de mise à jour de l'épitomé à partir d'un épitomé complémentaire transmis dans le signal.

Dans un autre mode de réalisation, l'invention concerne un dispositif de décodage d'un signal représentatif d'une séquence d'images tel que défini par la revendication indépendante 11.

Un tel décodeur est notamment adapté à mettre en œuvre le procédé de décodage décrit précédemment. Il s'agit par exemple d'un décodeur vidéo de type H.264.

Ce dispositif de décodage pourra bien sûr comporter les différentes caractéristiques relatives au procédé de décodage selon l'invention.

L'invention concerne encore un programme d'ordinateur comportant des instructions pour la mise en œuvre d'un procédé de codage et/ou d'un procédé de décodage tels que décrits précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1 et 2 présentent les principales étapes mises en œuvre respectivement au codage et au décodage selon l'invention ;
- la figure 3 illustre un exemple de réalisation d'un codeur selon la figure 1 ;
- les figures 4, 5A et 5B présentent des exemples de construction d'un épitomé ;
- les figures 6 et 7 présentent la structure simplifiée d'un codeur et d'un décodeur selon un mode de réalisation particulier de l'invention.

### 5. Description d'un mode de réalisation de l'invention

### 5.1 Principe général

Dans la suite, l'expression "mode de réalisation" doit être comprise comme désignant un exemple permettant d'illustrer l'invention, à moins qu'elle ne se réfère précisément à l'invention telle que définie dans les revendications.

Le principe général de l'invention repose sur l'utilisation d'un épitomé spécifique pour la prédiction d'au moins une image inter d'une séquence d'images. Plus précisément, un tel épitomé est construit à partir de plusieurs images de la séquence, et est donc représentatif d'une partie de la séquence. L'invention permet ainsi de coder plus efficacement l'image inter.

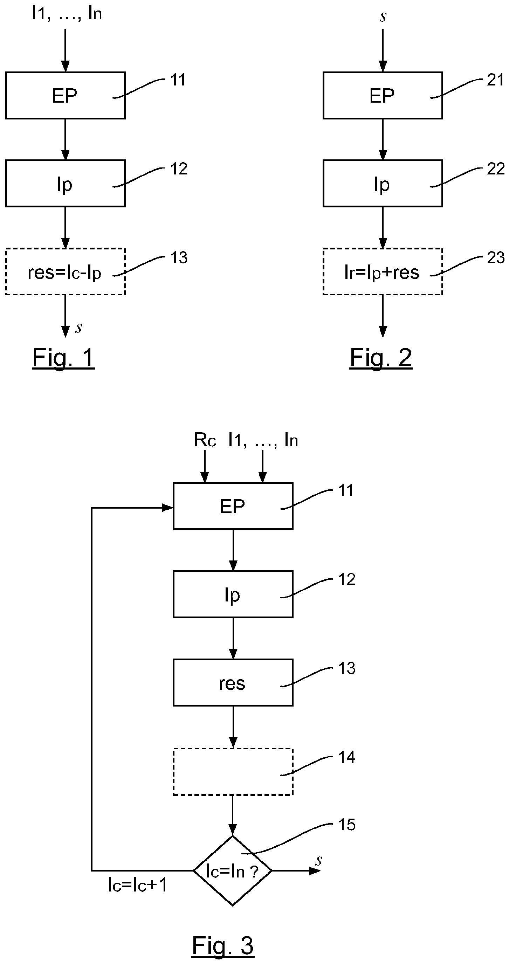

La figure 1 illustre les principales étapes mises en œuvre par un codeur selon l'invention.

Un tel codeur reçoit en entrée une séquence d'images I1 à In. Il construit (11) alors, pour au moins une image courante le de la séquence, un épitomé EP représentatif de l'image courante, à partir d'un ensemble d'au moins deux images de la séquence. On considère que l'image courante et l'ensemble d'images utilisé pour construire l'épitomé EP appartiennent à une même sous-séquence de la séquence, comprenant par exemple des images appartenant à un même plan (en anglais « shot ») ou un même GOP, ou une liste d'images de référence de l'image courante. L'épitomé EP est construit de manière à représenter au mieux cette sous-séquence d'images.

Au cours d'une étape suivante, le codeur met en œuvre une prédiction 12 de type inter-images de l'image courante, à partir de l'épitomé EP. Une telle prédiction met par exemple en œuvre une compensation en mouvement ou une technique de type « Template Matching » appliquée à l'épitomé, et délivre une image prédite Ip.

Il est ensuite possible de coder, au cours d'une étape de codage 13, le résidu de prédiction obtenu par comparaison entre l'image courante le et l'image prédite Ip.

La figure 2 illustre les principales étapes mises en œuvre par un décodeur selon l'invention.

Un tel décodeur reçoit en entrée un signal représentatif d'une séquence d'images.

Il met en œuvre une étape d'obtention 21, pour au moins une image à reconstruire Ir, d'un épitomé EP représentatif de l'image à reconstruire, et éventuellement d'un résidu de prédiction associé à l'image à reconstruire.

Au cours d'une étape suivante, le décodeur met en œuvre une prédiction 22 de type inter-images de l'image à reconstruire, à partir de l'épitomé EP.

Il est alors possible de reconstruire l'image Ir, au cours d'une étape de décodage 23, en ajoutant le résidu de prédiction à l'image obtenue à l'issue de l'étape de prédiction 22.

Selon un premier mode de réalisation, l'épitomé utilisé pour le codage de l'image courante le n'est pas transmis au décodeur. L'étape d'obtention 21 met alors en œuvre une étape de construction de l'épitomé à partir d'au moins deux images de la séquence, similaire à celle mise en œuvre par le codeur.

Selon un deuxième mode de réalisation, l'épitomé utilisé pour le codage de l'image courante le est transmis au décodeur. L'étape d'obtention 21 met alors en œuvre une étape de lecture de l'épitomé dans le signal.

### 5.2 Exemple de réalisation

On décrit ci-après, en relation avec les figures 3 à 5B, un exemple particulier de réalisation de l'invention, dans le contexte d'un codeur selon la norme H.264.

### 5.2.1 Côté codeur

On considère un codeur vidéo recevant en entrée une séquence d'images I1 à In, ainsi qu'un niveau de résolution cible, défini en fonction de la taille de l'épitomé. En effet, on rappelle qu'il est possible de réaliser un compromis entre la qualité de la reconstruction et la compacité en fonction de la taille de l'épitomé : plus l'épitomé est grand et plus la qualité de codage sera élevée. On note que la taille de l'épitomé correspond au maximum à la somme des tailles des images de l'ensemble servant à la génération de l'épitomé. Un bon compromis est de choisir comme taille cible de l'épitomé la taille d'une image de cet ensemble. Si, par exemple, on utilise une liste de référence comprenant huit images pour générer l'épitomé, on obtient dans ce cas un épitomé de qualité correcte tout en gagnant un facteur de compaction de huit.

### A) Construction de l'épitomé

Lors de l'étape de construction 11, le codeur construit, pour au moins une image courante le de la séquence, un épitomé EP représentatif de l'image courante, à partir d'un ensemble d'au moins deux images de la séquence.

L'ensemble d'images de la séquence traitées conjointement pour construire l'épitomé peut être choisi préalablement à l'étape de construction 11. Il s'agit par exemple d'images appartenant à un même plan que l'image courante.

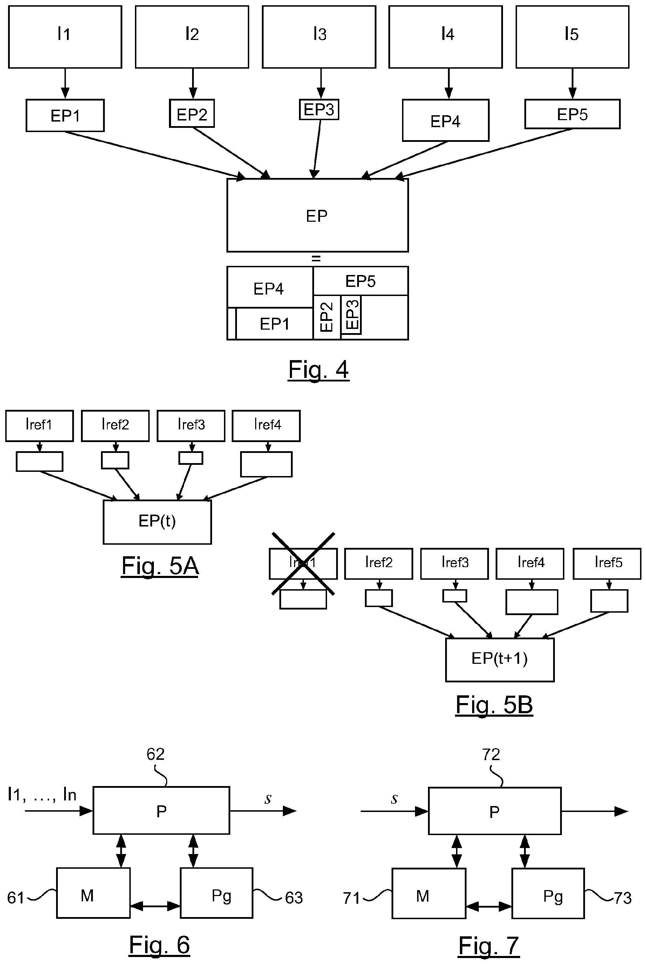

On considère par exemple une sous-séquence comprenant les images I1 à I5 et l'image courante le. L'épitomé utilisé pour prédire l'image courante le est construit à partir des images I1 à I5. Pour ce faire, comme illustré en figure 4, on détermine des épitomés associés à chacune des images I1 à I5, notés respectivement EP1 à EP5, en utilisant une technique classique de construction des épitomés, comme la technique de type maximum de vraisemblance a posteriori telle que présentée par Q. Wang et al. dans le document « Improving Intra Coding in H.264\AVC by Image Epitome, Advances in Multimedia Information Processing »*.* On « concatène » ensuite ces différents épitomés EP1 à EP5, pour construire l'épitomé « global » EP utilisé pour prédire l'image courante le. Une telle technique de « concaténation » d'épitomés est notamment présentée dans le document « Factoring repeated content within and among images », de H. Wang, Y. Wexler, E. Ofek, et H. Hoppe, et propose d'emboîter les épitomés EP1 à EP5 de façon à obtenir un épitomé global EP le plus compact possible. Selon cette technique, les éléments (ensembles de pixels, blocs) communs aux différents épitomés EP1 à EP5 ne sont pris qu'une fois dans l'épitomé global EP. Ainsi, l'épitomé global EP présente une taille au maximum égale à la somme des tailles des épitomés EP1 à EP5.

Selon une variante, le codeur construit l'épitomé en utilisant un ensemble dynamique, c'est-à-dire une liste d'images dans laquelle on ajoute et/ou on retire des images en fonction du contexte et/ou de l'avancement du codage dans la séquence. L'épitomé est donc calculé progressivement pour chaque nouvelle image à coder appartenant à un même plan, un même GOP, etc.

Par exemple, comme illustré en figures 5A et 5B, le codeur construit l'épitomé en utilisant une liste d'images de référence de l'image courante le en cours de codage, telle que définie dans la norme H.264.

A titre d'exemple, comme illustré en figure 5A, quatre images Iref1 à Iref4 se trouvent dans la liste d'images de référence de l'image courante le. Ces quatre images sont alors utilisées pour générer l'épitomé EP à l'instant t, en utilisant par exemple la technique de concaténation proposée par H. Wang et al.

A l'instant t+1, comme illustré en figure 5B, pour le codage d'une image de la sous-séquence suivant l'image courante le selon l'ordre de codage, la première image Iref de la liste d'images de référence est retirée et une nouvelle image Iref5 est ajoutée dans la liste d'images de référence. L'épitomé EP est alors mis à jour à partir de la liste d'images de référence mise à jour. Il est ainsi possible selon cette variante de raffiner l'épitomé « global » pour chaque nouvelle image à coder appartenant à un même plan, un même GOP, etc. Ainsi, l'épitomé EP à l'instant t+1 est généré à partir des quatre images Iref2 à Iref5, correspondant aux trois anciennes images Iref2 à Iref4 utilisés pour générer l'épitomé à l'instant t et à la nouvelle image Iref5. L'épitomé calculé sur la base de la nouvelle image de référence Iref5, noté épitomé complémentaire, pourra être transmis à l'instant t+1 au décodeur, en lieu et place de l'épitomé global EP(t+1).

Bien entendu, d'autres techniques de construction de l'épitomé EP à partir de plusieurs images sont également envisageables.

En particulier, l'étape de construction 11 peut également tenir compte du voisinage causal de l'image courante, en plus des images existantes de la sous-séquence, pour construire l'épitomé EP.

A l'issue de cette étape de construction 11, on obtient donc un épitomé EP « global » ou un épitomé complémentaire EPc associé à l'image courante le.

### B) Prédiction inter à partir de l'épitomé

On détermine alors une prédiction de type inter-image de l'image courante, notée Ip, au cours de l'étape 12, à partir de l'épitomé EP.

Une telle prédiction met par exemple en œuvre une compensation en mouvement à partir de l'épitomé. En d'autres termes, on considère que l'épitomé EP ainsi construit est une image de référence, et on prédit l'image courante le à partir de vecteurs de mouvement pointant de l'image courante vers l'épitomé EP (compensation en arrière) ou de l'épitomé vers l'image courante (compensation en mouvement en avant).

En variante, une telle prédiction met en œuvre une technique de type « Template Matching » appliquée à l'épitomé. Dans ce cas, le voisinage (« template » ou « modèle » cible) d'un bloc de l'image courante est sélectionné. En général, il s'agit de pixels formant un L (« L-Shape ») au-dessus et à gauche de ce bloc (bloc cible). Ce voisinage est comparé à des formes équivalentes (« templates » ou « modèles » sources) dans l'épitomé. Si un modèle source est proche du modèle cible (selon un critère de distance), le bloc correspondant du modèle source est utilisé comme prédiction du bloc cible.

### C) Codage et transmission de l'image

Il est ensuite possible de coder, au cours d'une étape de codage 13, le résidu de prédiction obtenu par comparaison entre l'image courante le et l'image prédite Ip.

### D) Codage et transmission de l'épitomé

L'étape de codage et transmission de l'épitomé 14 est facultative.

En effet, selon un premier mode de réalisation, l'épitomé EP utilisé pour le codage de l'image courante le n'est pas transmis au décodeur. Cet épitomé est en revanche regénéré au décodeur, sur la base des images existantes de la séquence et éventuellement du voisinage causal de l'image courante.

Selon un deuxième mode de réalisation, l'épitomé EP, ou un épitomé complémentaire EPc, utilisé pour le codage de l'image courante le est transmis au décodeur. Dans ce cas, il n'est plus nécessaire d'adjoindre à l'image en cours de codage le numéro de la ou des images qui servent classiquement de référence pour sa prédiction (en anglais « reference frame number »).

### E) Fin de l'algorithme de codage

Si l'image courante est la dernière image de la séquence d'images (test 15, le = In ?), on arrête l'algorithme de codage.

Sinon, on passe à l'image suivant l'image courante dans la séquence selon l'ordre de codage (Ic+1), et on retourne à l'étape de construction 11 de l'épitomé pour cette nouvelle image.

On note que l'étape de prédiction 12 pourrait mettre en œuvre un autre mode de codage, pour au moins une image de la séquence. En effet, on choisit pour la prédiction le mode de codage qui offre un meilleur compromis débit/distorsion, parmi l'ensemble des modes de codage existant et le mode de codage basé sur l'utilisation d'un épitomé selon l'invention.

En particulier, l'étape de prédiction 12 peut mettre en œuvre un autre mode de codage pour au moins un bloc d'une image de la séquence si la prédiction est mise en œuvre bloc par bloc.

Ainsi, en variante, l'étape de prédiction 12 peut être précédée par un test permettant de déterminer si le mode de reconstruction par vecteur de mouvement à partir de l'épitomé (noté M_EPIT) est le meilleur pour chaque bloc à coder. Si tel n'est pas le cas, l'étape de prédiction 12 peut mettre en œuvre une autre technique de prédiction.

### 5.2.2 Signal représentatif de la séquence d'images

Le signal généré par le codeur peut porter différentes informations, selon que l'épitomé ou un épitomé complémentaire est transmis ou non au décodeur, pour au moins une image de la séquence.

Ainsi, par exemple, un tel signal comprend au moins un indicateur permettant de signaler qu'un épitomé est utilisé pour prédire une ou plusieurs images de la séquence, qu'un épitomé ou plusieurs épitomés sont transmis dans le signal, qu'un épitomé complémentaire ou plusieurs épitomés complémentaires sont transmis dans le signal, etc.

On note que les épitomés ou épitomés complémentaires, qui sont des données de type image, peuvent être codés dans le signal comme des images de la séquence.

### 5.2.3 Côté décodeur

Les principales étapes mises en œuvre au décodeur ont d'ores et déjà été décrites en relation avec la figure 2.

Plus précisément, le décodeur met en œuvre une étape d'obtention 21, pour au moins une image à reconstruire Ir, d'un épitomé EP représentatif de l'image à reconstruire.

Selon un premier mode de réalisation, l'épitomé utilisé pour le codage de l'image courante le n'est pas transmis au décodeur. Par exemple, le décodeur lit dans le signal représentatif de la séquence d'image au moins un indicateur signalant qu'un épitomé a été utilisé pour prédire l'image à reconstruire, et que cet épitomé n'est pas transmis dans le signal.

Le décodeur met alors en œuvre une étape de construction de l'épitomé EP à partir d'au moins deux images de la séquence, similaire à celle mise en œuvre par le codeur précédemment décrite.

Comme pour le codeur, l'épitomé peut être construit en utilisant un ensemble dynamique, c'est-à-dire une liste d'images dans laquelle on ajoute et/ou on retire des images en fonction du contexte et/ou de l'avancement du décodage dans la séquence. L'épitomé est donc calculé progressivement pour chaque nouvelle image à reconstruire appartenant à une même plan, un même GOP, etc.

Par exemple, le décodeur construit l'épitomé en utilisant une liste d'images de référence de l'image en cours de décodage, telle que définie dans la norme H.264.

Selon un deuxième mode de réalisation, l'épitomé utilisé pour le codage de l'image courante le est transmis au décodeur. Par exemple, le décodeur lit dans le signal représentatif de la séquence d'image au moins un indicateur signalant qu'un épitomé a été utilisé pour prédire l'image à reconstruire, et que cet épitomé, ou un épitomé complémentaire, est transmis dans le signal.

Le décodeur met alors en œuvre une étape de lecture de l'épitomé EP ou d'un épitomé complémentaire dans le signal.

Plus précisément, on considère que pour la première image à reconstruire d'une sous-séquence, on reçoit l'épitomé EP. Ensuite, pour au moins une image à reconstruire suivant la première image à reconstruire dans la sous-séquence selon l'ordre de décodage, on reçoit un épitomé complémentaire, permettant de mettre à jour l'épitomé EP.

Une fois l'épitomé obtenu, le décodeur met en œuvre une prédiction de l'image à reconstruire. Si l'image à reconstruire ou au moins un bloc de l'image à reconstruire ont été prédit au codage à partir de l'épitomé (mode M_EPIT), l'étape de prédiction 22 met en œuvre une prédiction de type inter-images à partir de l'épitomé, similaire à celle mise en œuvre par le codeur précédemment décrite.

Ainsi une telle prédiction met par exemple en œuvre une compensation en mouvement ou une technique de « Template Matching » à partir de l'épitomé.

Le décodeur utilise donc l'épitomé comme source de prédiction alternative pour l'estimation de mouvement.

### 5.3 Structure du codeur et du décodeur

On présente finalement, en relation avec les figures 6 et 7, la structure simplifiée d'un codeur et d'un décodeur mettant respectivement en œuvre une technique de codage et une technique de décodage selon l'un des modes de réalisation décrits ci-dessus.

Par exemple, le codeur comprend une mémoire 61 comprenant une mémoire tampon M, une unité de traitement 62, équipée par exemple d'un processeur P, et pilotée par un programme d'ordinateur Pg 63, mettant en œuvre le procédé de codage selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée une séquence d'images à coder. Le processeur de l'unité de traitement 62 met en œuvre les étapes du procédé de codage décrit précédemment, selon les instructions du programme d'ordinateur 63, pour coder au moins une image courante de la séquence. Pour cela, le codeur comprend, outre la mémoire 61, des moyens de construction d'un épitomé représentatif de l'image courante, à partir d'un ensemble d'au moins deux images de la séquence et des moyens de prédiction inter-images de l'image courante à partir de l'épitomé. Ces moyens sont pilotés par le processeur de l'unité de traitement 62.

Le décodeur comprend quant à lui une mémoire 71 comprenant une mémoire tampon M, une unité de traitement 72, équipée par exemple d'un processeur P, et pilotée par un programme d'ordinateur Pg 73, mettant en œuvre le procédé de décodage selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un signal représentatif de la séquence d'images. Le processeur de l'unité de traitement 72 met en œuvre les étapes du procédé de décodage décrit précédemment, selon les instructions du programme d'ordinateur 73, pour décoder et reconstruire au moins une image de la séquence. Pour cela, le décodeur comprend, outre la mémoire 71 des moyens d'obtention d'un épitomé représentatif de l'image à reconstruire, et des moyens de prédiction inter-images de l'image à reconstruire à partir de l'épitomé. Ces moyens sont pilotés par le processeur de l'unité de traitement 72.

## Revendications

1. Procédé de codage d'une séquence d'images, mettant en œuvre les étapes suivantes, pour au moins une image courante de ladite séquence :
- construction (11) d'un épitomé représentatif de ladite image courante, à partir d'un ensemble d'au moins deux images de ladite séquence;
- prédiction inter-images (12) de ladite image courante à partir dudit épitomé ;
**caractérisé en ce que** ledit ensemble d'au moins deux images correspond à une liste d'images de référence de l'image courante et **en ce que** ledit épitomé n'est pas transmis à un décodeur.

2. Procédé de codage selon la revendication 1, **caractérisé en ce que** ladite étape de construction (11) tient également compte du voisinage causal de ladite image courante.

3. Procédé de codage selon la revendication 1, comprenant en outre, pour le codage d'au moins une image suivant ladite image courante selon un ordre de codage de ladite séquence, une étape de mise à jour dudit ensemble d'au moins deux images et de mise à jour dudit épitomé à partir dudit ensemble mis à jour.

4. Procédé de codage selon la revendication 3, **caractérisé en ce qu'**il comprend une étape de transmission d'un épitomé complémentaire à au moins un décodeur destiné à décoder ladite séquence d'images, ledit épitomé complémentaire étant obtenu par comparaison dudit épitomé et dudit épitomé mis à jour.

5. Procédé de codage selon la revendication 1, **caractérisé en ce que** ledit épitomé présente une taille identique à la taille de ladite image courante.

6. Dispositif de codage d'une séquence d'images, comprenant les moyens suivants, activés pour au moins une image courante de ladite séquence :
- des moyens de construction (11) d'un épitomé représentatif de ladite image courante, à partir d'un ensemble d'au moins deux images de ladite séquence ;
- des moyens de prédiction inter-images (12) de ladite image courante à partir dudit épitomé ;
- **caractérisé en ce que** ledit ensemble d'au moins deux images correspond à une liste d'images de référence de l'image courante et **en ce que** ledit épitomé n'est pas transmis à un décodeur.

7. Signal représentatif d'une séquence d'images codée selon le procédé de codage selon l'une quelconque des revendications 1 à 5, **caractérisé en ce que** ledit signal porte au moins un indicateur signalant une utilisation dudit épitomé lors de la prédiction inter-images de ladite image courante, ledit épitomé n'étant pas transmis à un décodeur.

8. Procédé de décodage d'un signal représentatif d'une séquence d'images,
mettant en œuvre les étapes suivantes, pour au moins une image à reconstruire :
- construction (21) d'un épitomé représentatif de ladite image à reconstruire, à partir d'un ensemble d'au moins deux images de ladite séquence,;
- prédiction inter-images (22) de ladite image à reconstruire à partir dudit épitomé ;
- **caractérisé en ce que** ledit ensemble d'au moins deux images correspond à une liste d'images de référence de l'image à reconstruire.

9. Procédé de décodage selon la revendication 8, comprenant en outre pour le décodage d'au moins une image suivant ladite image à reconstruire selon un ordre de décodage de ladite séquence, une étape de mise à jour dudit ensemble d'au moins deux images et de mise à jour dudit épitomé à partir dudit ensemble mis à jour.

10. Procédé de décodage selon la revendication 9, **caractérisé en ce que** ladite étape de mise à jour met à jour ledit épitomé à partir d'un épitomé complémentaire compris dans un signal transmis entre le codeur et le décodeur, ledit épitomé complémentaire étant obtenu par comparaison dudit épitomé et dudit épitomé mis à jour.

11. Dispositif de décodage d'un signal représentatif d'une séquence d'images,
comprenant les moyens suivants, activés pour au moins une image à reconstruire :
- des moyens de construction (21) d'un épitomé représentatif de ladite image à reconstruire à partir d'un ensemble d'au moins deux images de ladite séquence;
- des moyens de prédiction inter-images (22) de ladite image à reconstruire à partir dudit épitomé, caractérisé que ce ledit ensemble d'au moins deux images correspond à une liste d'images de référence de l'image à reconstruire.

12. Programme d'ordinateur comportant des instructions pour la mise en œuvre d'un procédé de codage d'une séquence d'images selon l'une quelconque des revendications 1 à 5 lorsque ce programme est exécuté par un processeur.

13. Programme d'ordinateur comportant des instructions pour la mise en œuvre d'un procédé de décodage d'un signal représentatif d'une séquence d'images selon l'une quelconque des revendications 8 à 10, lorsque ce programme est exécuté par un processeur.

14. Support d'enregistrement lisible par ordinateur comportant un programme d'ordinateur selon l'une quelconque des revendications 12 ou 13.

15. Support d'enregistrement portant un signal selon la revendication 7.

## Patentansprüche

1. Verfahren zur Kodierung einer Bildsequenz, bei welchem für wenigstens ein aktuelles Bild der Sequenz die folgenden Schritte durchgeführt werden:
- Konstruktion (11) eines Epitoms, das für das aktuelle Bild repräsentativ ist, aus einer Gesamtheit von wenigstens zwei Bildern der Sequenz;
- Inter-Bild-Prädiktion (12) des aktuellen Bildes anhand des Epitoms;
**dadurch gekennzeichnet, dass** die Gesamtheit von wenigstens zwei Bildern einer Liste von Referenzbildern des aktuellen Bildes entspricht und dadurch, dass das Epitom nicht an einen Dekoder übertragen wird.

2. Verfahren zur Kodierung nach Anspruch 1, **dadurch gekennzeichnet, dass** der Schritt der Konstruktion (11) auch die kausale Umgebung des aktuellen Bildes berücksichtigt.

3. Verfahren zur Kodierung nach Anspruch 1, welches außerdem für die Kodierung wenigstens eines Bildes, das gemäß einer Kodierungsreihenfolge der Sequenz auf das aktuelle Bild folgt, einen Schritt der Aktualisierung der Gesamtheit von wenigstens zwei Bildern und der Aktualisierung des Epitoms anhand dieser aktualisierten Gesamtheit umfasst.

4. Verfahren zur Kodierung nach Anspruch 3, **dadurch gekennzeichnet, dass** es einen Schritt der Übertragung eines komplementären Epitoms an wenigstens einen Dekoder umfasst, der dazu bestimmt ist, die Bildsequenz zu dekodieren, wobei das komplementäre Epitom durch Vergleich des Epitoms und des aktualisierten Epitoms erhalten wird.

5. Verfahren zur Kodierung nach Anspruch 1, **dadurch gekennzeichnet, dass** das Epitom eine Größe aufweist, die mit der Größe des aktuellen Bildes identisch ist.

6. Vorrichtung zur Kodierung einer Bildsequenz, welche die folgenden Mittel umfasst, die für wenigstens ein aktuelles Bild der Sequenz aktiviert werden:
- Mittel zur Konstruktion (11) eines Epitoms, das für das aktuelle Bild repräsentativ ist, aus einer Gesamtheit von wenigstens zwei Bildern der Sequenz;
- Mittel zur Inter-Bild-Prädiktion (12) des aktuellen Bildes anhand des Epitoms;
**dadurch gekennzeichnet, dass** die Gesamtheit von wenigstens zwei Bildern einer Liste von Referenzbildern des aktuellen Bildes entspricht und dadurch, dass das Epitom nicht an einen Dekoder übertragen wird.

7. Signal, welches für eine gemäß dem Verfahren zur Kodierung nach einem der Ansprüche 1 bis 5 kodierte Bildsequenz repräsentativ ist, **dadurch gekennzeichnet, dass** das Signal wenigstens einen Indikator übermittelt, der eine Verwendung des Epitoms bei der Inter-Bild-Prädiktion des aktuellen Bildes signalisiert, wobei das Epitom nicht an einen Dekoder übertragen wird.

8. Verfahren zur Dekodierung eines für eine Bildsequenz repräsentativen Signals, bei welchem für wenigstens ein zu rekonstruierendes Bild die folgenden Schritte durchgeführt werden:
- Konstruktion (21) eines Epitoms, das für das zu rekonstruierende Bild repräsentativ ist, aus einer Gesamtheit von wenigstens zwei Bildern der Sequenz;
- Inter-Bild-Prädiktion (22) des zu rekonstruierenden Bildes anhand des Epitoms;
**dadurch gekennzeichnet, dass** die Gesamtheit von wenigstens zwei Bildern einer Liste von Referenzbildern des zu rekonstruierenden Bildes entspricht.

9. Verfahren zur Dekodierung nach Anspruch 8, welches außerdem für die Dekodierung wenigstens eines Bildes, das gemäß einer Dekodierungsreihenfolge der Sequenz auf das zu rekonstruierende Bild folgt, einen Schritt der Aktualisierung der Gesamtheit von wenigstens zwei Bildern und der Aktualisierung des Epitoms anhand dieser aktualisierten Gesamtheit umfasst.

10. Verfahren zur Dekodierung nach Anspruch 9, **dadurch gekennzeichnet, dass** im Schritt der Aktualisierung das Epitom anhand eines komplementären Epitoms aktualisiert wird, das in einem zwischen dem Kodierer und dem Dekoder übertragenen Signal enthalten ist, wobei das komplementäre Epitom durch Vergleich des Epitoms und des aktualisierten Epitoms erhalten wird.

11. Vorrichtung zur Dekodierung eines für eine Bildsequenz repräsentativen Signals, welche die folgenden Mittel umfasst, die für wenigstens ein zu rekonstruierendes Bild aktiviert werden:
- Mittel zur Konstruktion (21) eines Epitoms, das für das zu rekonstruierende Bild repräsentativ ist, aus einer Gesamtheit von wenigstens zwei Bildern der Sequenz;
- Mittel zur Inter-Bild-Prädiktion (22) des zu rekonstruierenden Bildes anhand des Epitoms, **dadurch gekennzeichnet, dass** die Gesamtheit von wenigstens zwei Bildern einer Liste von Referenzbildern des zu rekonstruierenden Bildes entspricht.

12. Computerprogramm, welches Anweisungen zur Durchführung eines Verfahrens zur Kodierung einer Bildsequenz nach einem der Ansprüche 1 bis 5, wenn dieses Programm von einem Prozessor ausgeführt wird, umfasst.

13. Computerprogramm, welches Anweisungen zur Durchführung eines Verfahrens zur Dekodierung eines für eine Bildsequenz repräsentativen Signals nach einem der Ansprüche 8 bis 10, wenn dieses Programm von einem Prozessor ausgeführt wird, umfasst.

14. Aufzeichnungsträger, der durch einen Rechner lesbar ist, welcher ein Rechnerprogramm nach einem der Ansprüche 12 oder 13 umfasst.

15. Aufzeichnungsträger, der ein Signal nach Anspruch 7 trägt.

## Claims

1. Method for coding a sequence of images, implementing the following steps, for at least one current image of said sequence:
- construction (11) of an epitome representative of said current image, on the basis of a set of at least two images of said sequence;
- inter-image prediction (12) of said current image on the basis of said epitome;
**characterized in that** said set of at least two images corresponds to a list of reference images of the current image and **in that** said epitome is not transmitted to a decoder.

2. Coding method according to Claim 1, **characterized in that** said construction step (11) also takes account of the causal neighbourhood of said current image.

3. Coding method according to Claim 1, furthermore comprising, for the coding of at least one image following said current image according to an order of coding of said sequence, a step of updating said set of at least two images and of updating said epitome on the basis of said updated set.

4. Coding method according to Claim 3, **characterized in that** it comprises a step of transmitting a complementary epitome to at least one decoder intended to decode said sequence of images, said complementary epitome being obtained by comparison of said epitome and of said updated epitome.

5. Coding method according to Claim 1, **characterized in that** said epitome exhibits a size identical to the size of said current image.

6. Device for coding a sequence of images, comprising the following means activated for at least one current image of said sequence:
- construction means (11) for constructing an epitome representative of said current image, on the basis of a set of at least two images of said sequence;
- means of inter-image prediction (12) of said current image on the basis of said epitome; **characterized in that** said set of at least two images corresponds to a list of reference images of the current image and **in that** said epitome is not transmitted to a decoder.

7. Signal representative of a sequence of images coded according to the coding method according to any one of Claims 1 to 5, **characterized in that** said signal carries at least one indicator signalling a use of said epitome during the inter-image prediction of said current image, said epitome not being transmitted to a decoder.

8. Method for decoding a signal representative of a sequence of images, implementing the following steps, for at least one image to be reconstructed:
- construction (21) of an epitome representative of said image to be reconstructed, on the basis of a set of at least two images of said sequence;
- inter-image prediction (22) of said image to be reconstructed on the basis of said epitome; **characterized in that** said set of at least two images corresponds to a list of reference images of the image to be reconstructed.

9. Decoding method according to Claim 8, furthermore comprising, for the decoding of at least one image following said image to be reconstructed according to an order of decoding of said sequence, a step of updating said set of at least two images and of updating said epitome on the basis of said updated set.

10. Decoding method according to Claim 9, **characterized in that** said step of updating updates said epitome on the basis of a complementary epitome included in a signal transmitted between the coder and the decoder, said complementary epitome being obtained by comparison of said epitome and of said updated epitome.

11. Device for decoding a signal representative of a sequence of images, comprising the following means activated for at least one image to be reconstructed:
- construction means (21) for constructing an epitome representative of said image to be reconstructed on the basis of a set of at least two images of said sequence;
- means of inter-image prediction (22) of said image to be reconstructed on the basis of said epitome; **characterized in that** said set of at least two images corresponds to a list of reference images of the image to be reconstructed.

12. Computer program comprising instructions for the implementation of a method for coding a sequence of images according to any one of Claims 1 to 5 when this program is executed by a processor.

13. Computer program comprising instructions for the implementation of a method for decoding a signal representative of a sequence of images according to any one of Claims 8 to 10 when this program is executed by a processor.

14. Recording medium readable by computer comprising a computer program according to either one of Claims 12 or 13.

15. Recording medium carrying a signal according to Claim 7.
